# EUROPEAN PATENT SPECIFICATION

(11) **EP 4 350 950 B1**
(45) Date of publication and mention of the grant of the patent: **26.08.2026**
(21) Application number: 22827456.9
(22) Date of filing: 15.06.2022
(51) Int. Cl.: H02J 50/60, H02J 7/02, H02J 13/00, G01N 27/02, G01N 27/04, G01N 35/00, G01R 27/26, B60L 53/124, B60L 53/126, B60L 53/34

(54) **WIRELESS CHARGING CONTROL METHOD AND DEVICE, AND VEHICLE**
VERFAHREN UND VORRICHTUNG ZUR STEUERUNG VON DRAHTLOSEM LADEN UND FAHRZEUG
PROCÉDÉ ET DISPOSITIF DE COMMANDE DE CHARGE SANS FIL, ET VÉHICULE

(30) Priority: 21.06.2021 CN 202110688948
(43) Date of publication of application: 10.04.2024
(73) Proprietor: Great Wall Motor Company Limited, Baoding, Hebei 071000 (CN)
(72) Inventor: JIANG, Jingmei, Baoding, Hebei 071000 (CN); REN, Yan, Baoding, Hebei 071000 (CN)
(74) Representative: Klunker IP Patentanwälte PartG mbB
(86) International application number: PCT/CN2022/098988
(87) International publication number: WO 2022/267961

(56) References cited:
- WO-A1-2020/130162
- CN-A- 109 756 033
- CN-A- 109 952 503
- CN-A- 110 474 443
- CN-A- 110 912 284
- CN-A- 113 972 703
- JP-A- 2013 106 427
- KR-A- 20170 140 685
- US-A1- 2019 310 388
- US-A1- 2020 328 629

## Description

### TECHINICAL FIELD

The present invention relates to the field of wireless charging, and in particular, to a wireless charging control method, a control device, and a vehicle.

### BACKGROUND

With the development of technology, the functions of cars, such as in-vehicle wireless charging technology, are gradually increasing. In-vehicle wireless charging technology is the application of mobile phone wireless charging technology in cars. This technology allows people to easily and conveniently place their mobile phones in the charging area in the car. This also solves many problems in conventional charging methods such as inconvenience caused by wiring and plugging and forgetting to bring the charging cable.

The current vehicle wireless charging technology can detect foreign objects in wireless charging during the charging process. If foreign objects are detected, the working value of the wireless charging transmitter will change and reach the preset alarm parameters, thereby triggering the alarm to notify the user.

However, the existing foreign object detection is inaccurate and has a high false judgment rate.

US 2019/310388 A1 discloses a method and an apparatus for detecting foreign material in wireless charging, the method by which a wireless power transmitter detects foreign material comprises: measuring the strength of a current inputted into an inverter in a ping step; receiving a packet including a receiver type identifier; determining a threshold value for detecting the foreign material corresponding to the receiver type identifier; and comparing the measured strength of current with the threshold value so as to determine whether a foreign material is present.

US 2020/328629 A1 discloses an apparatus and method for performing foreign object detection in a wireless power transfer system, the method comprising: receiving a digital ping from the wireless power transmitter; transmitting an identification and configuration packets to the wireless power transmitter; transmitting a foreign object detection (FOD) state packet which indicates a reference Q factor of the wireless power receiver to the wireless power transmitter; and receiving wireless power through magnetic coupling from the wireless power transmitter based on the foreign object detection result of the wireless power transmitter using the reference Q factor.

### SUMMARY

It is an object of the present invention to provide a wireless charging control method, a control device and a vehicle, aiming to at least improve the detection accuracy of wireless charging equipment.

The object is achieved by the features of the independent claims. Further embodiments are defined in the dependent claims.

### Advantageous effects:

When a terminal device needs charging, the wireless charging apparatus first obtains the model information of the terminal device connected thereto, determines the corresponding foreign-object alarm threshold based on the model information of the terminal device, and then controls a charging state of the wireless charging apparatus for the terminal device according to the magnitude relationship between a current Q factor of the wireless charging apparatus and the foreign-object alarm threshold, so that respective foreign-object alarm thresholds for different mobile phone models can be utilized, thereby reducing false triggering of alarm conditions or mismatch and charging normally. This can improve the accuracy of foreign-object detection, reduce the false judgment rate, and improve the adaptability of wireless charging apparatus to a certain extent, thereby improving the detection accuracy of wireless charging apparatus.

### BRIEF DESCRIPTION OF THE DRAWINGS

FIG. 1 is a flow chart of steps of a control method;
FIG. 2 is a flow chart of steps of a control method;
FIG. 3 is a flow chart of the determination in a control method;
FIG. 4 is a flow chart of the determination in a control method;
FIG. 5 is a schematic diagram of a control device;
FIG. 6 is a schematic diagram of a control device;
FIG. 7 is a block diagram showing a block diagram of the computing processing equipment for performing the discussed method; and
FIG. 8 is a block diagram showing a storage unit for holding or carrying program code implementing the discussed method.

Reference signs are as follows: 100 model detection module; 200 parameter determination module; 201 parameter target unit; 202 parameter acquisition unit; 300 charging state determination module; 301 terminating state unit; 302 charging state unit; 400 power-loss-threshold determination module; 401 power-loss-threshold target unit; 402 power-loss-threshold determination unit; 500 working-condition-information acquisition module; 600 charging state adjustment module; 601 power loss calculation unit; 602 charging control unit; 603 charging termination control unit.

### DETAILED DESCRIPTION

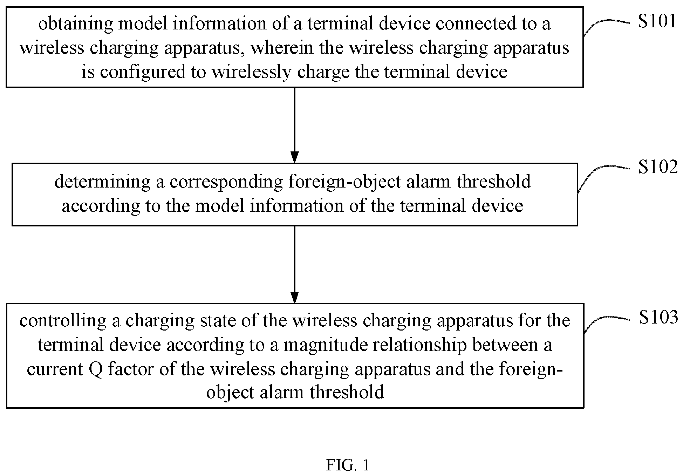

Referring to FIG. 1, a flow chart of steps of a wireless charging control method. As shown in FIG. 1, the control method may specifically include the following steps S101 to S103.

In S101: model information of a terminal device connected to a wireless charging apparatus is obtained, where the wireless charging apparatus is configured to wirelessly charge the terminal device.

In the present step, the wireless charging apparatus may be a wireless charger installed on the vehicle, and the terminal device may be a mobile phone with a wireless charging function. The method of obtaining the model information of the terminal device may be to identify the model of the terminal device by obtaining an image of the terminal device. Taking a mobile phone as an example, the image information of the mobile phone is obtained, the image of the mobile phone is processed, and the shape, trademark and camera shape characteristics of the mobile phone are extracted from the image and matched with samples from a pre-established database to determine that the model number of the most similar sample is the model information of the terminal device.

In S102: a corresponding foreign-object alarm threshold is determined based on the model information of the terminal device.

In the present step, terminal devices with different models have different foreign-object alarm thresholds. For example, the wireless charging of the iPhone 12 utilizes a magnetic positioning function, with a positioning magnet and array magnetic ring around the charging coil of the mobile phone. Therefore, if the iPhone 12 shares the same set of parameters as other mobile phones, the alarm conditions will be easily triggered thereby affecting the user. Therefore, it is necessary to determine the corresponding foreign-object alarm thresholds for mobile phones with different models.

In step S103: a charging state of the wireless charging apparatus for the terminal device is controlled based on a magnitude relationship between a current Q factor of the wireless charging apparatus and the foreign-object alarm threshold.

For example, when the terminal device is a mobile phone, the wireless charging technology of mobile phones adopts electromagnetic induction. The Q factor in this step is the Q factor of an inductor, also referred to as the quality factor of the inductor, which is the main parameter to measure an inductor device. Q factor is the ratio of the inductive reactance exhibited by the inductor to the equivalent resistance thereof when the inductor operates under an AC voltage of a certain frequency, that is, the greater the resistance, the smaller the Q factor.

When there is a foreign object between the terminal device and the wireless charging apparatus, it is equivalent to a resistive load being connected in parallel to the transmitting coil of the wireless charging apparatus, thereby reducing the Q factor. Therefore, by comparing the current Q factor of the wireless charging apparatus with the foreign-object alarm threshold, it is allowed to reflect to a certain extent whether there is a foreign object between the wireless charging apparatus and its terminal device and thus control the charging state of the wireless charging apparatus for the terminal device according to whether there is a foreign object.

Therefore, when the terminal device needs charging, the wireless charging apparatus first obtains model information of the terminal device connected thereto, determines a corresponding foreign-object alarm threshold based on the model information of the terminal device, and then controls the charging state of the wireless charging apparatus for the terminal device based on a magnitude relationship between the current Q factor of the wireless charging apparatus and the foreign object alarm thresholds, thus the corresponding foreign-object alarm threshold can be employed according to the different models of mobile phones, thereby reducing the impact on normal charging due to differences in models of the terminal device, and improving the adaptability of wireless charging apparatus and the detection accuracy of wireless charging apparatus.

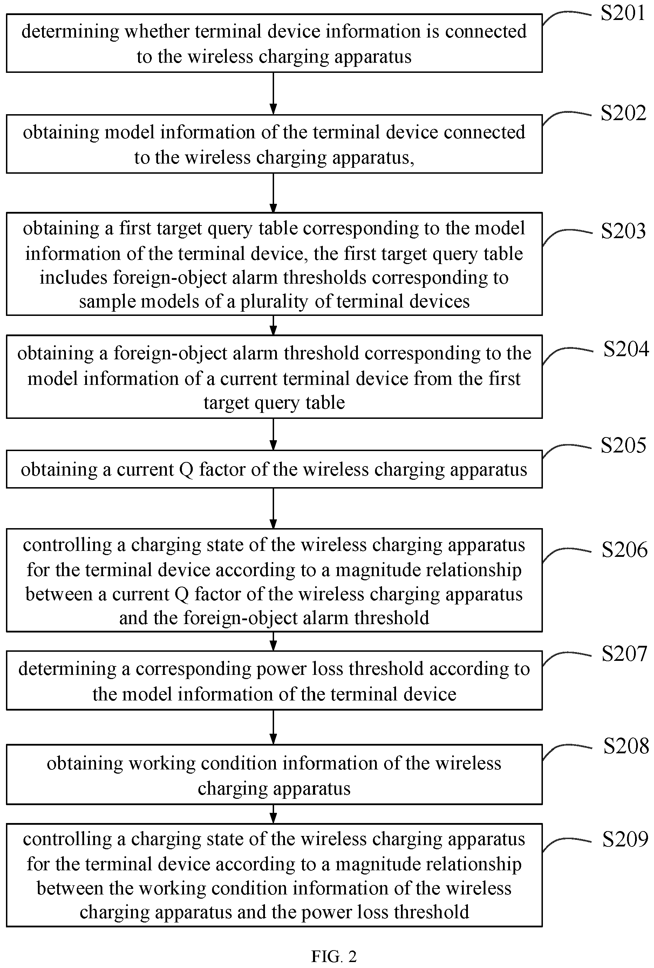

Referring to FIG. 2, a flow chart of steps of a wireless charging control method is shown. As shown in FIG. 2, a wireless charging control method may specifically include the following steps S201-S206.

In step S201: whether terminal device information is connected to the wireless charging apparatus is detected; if there is a terminal device, execute step S202.

In this step, it is first determined whether there is a terminal device connected to the wireless charging apparatus. A sensing element, such as a pressure sensor or infrared sensor, may be used to detect the terminal device.

In step S202: model information of the terminal device connected to the wireless charging apparatus is obtained, where the wireless charging apparatus is configured to wirelessly charge the terminal device.

After detecting that a terminal device is connected to the wireless charging apparatus, the model information of the terminal device is obtained. The obtaining method is as in step S101.

In step S203: a first target query table corresponding to the model information of the terminal device is obtained, and the first target query table includes foreign-object alarm thresholds corresponding to respective sample models of a plurality of terminal devices.

In this step, the foreign-object alarm thresholds corresponding to the sample models of the plurality of terminal devices are pre-stored in the first target query table. The first target query table may be obtained from local storage or through the Internet.

In step S204: the foreign-object alarm threshold corresponding to the model information of a current terminal device is obtained from the first target query table.

In this step, the corresponding foreign-object alarm threshold is called from the first target query table according to the model of the current terminal device connected to the wireless charging apparatus.

In step S205: a current Q factor of the wireless charging apparatus is obtained.

In this step, the current Q factor of the wireless charging apparatus may be obtained through calculation.

In step S206: the charging state of the wireless charging apparatus for the terminal device is determined based on the magnitude relationship between the current Q factor of the wireless charging apparatus and the foreign-object alarm threshold, the step specifically includes:
controlling, if the current Q factor is less than the foreign-object alarm threshold, the wireless charging apparatus to stop matching the terminal device and triggering an alarm;
controlling, if the current Q factor is greater than or equal to the foreign-object alarm threshold, the wireless charging apparatus to match and charge the terminal device.

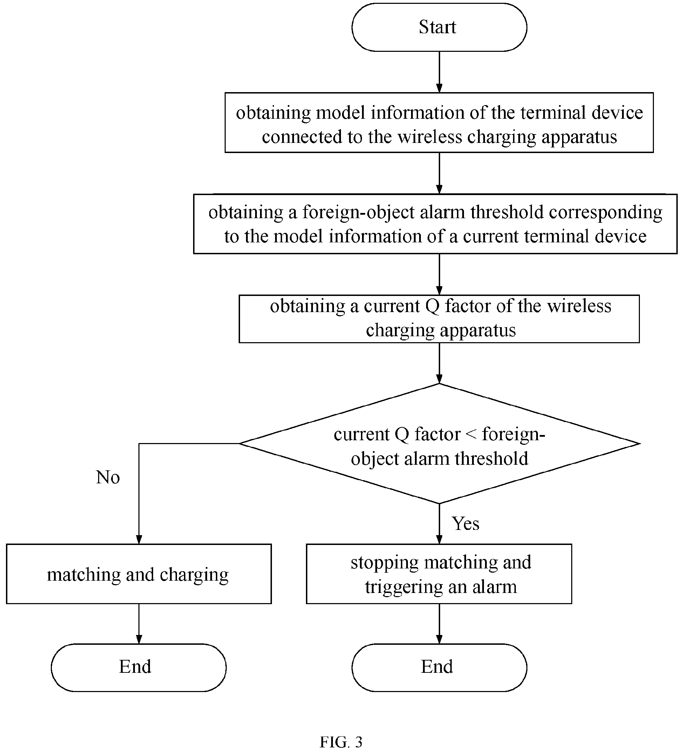

The specific determination process is shown in FIG. 3. Since the greater the loss, the smaller the Q factor. Therefore, if the current Q factor is less than the foreign-object alarm threshold, it is determined that there is a foreign object, and then the matching of the wireless charging apparatus and the terminal device is stopped, and an alarm is triggered. The alarm may be text, sound or light, to notify the user that there is a foreign object between the wireless charging apparatus and the terminal device.

If the current Q factor is greater than or equal to the foreign-object alarm threshold, the wireless device is controlled to match the terminal device and start charging the terminal device.

After the wireless charging apparatus starts charging the terminal device, the acquisition of the current Q factor of the wireless charging apparatus and the comparison with the foreign-object alarm threshold corresponding to the terminal device of this model continue, so as to detect whether a foreign object is present.

If the current Q factor is greater than or equal to the foreign-object alarm threshold, the wireless charging apparatus is controlled to match and charge the terminal device, and, during the process of charging the terminal device, the method also includes the following steps S201 to S209.

In step S207: the corresponding power loss threshold based on the model information of the terminal device is determined; specifically:
a second target query table corresponding to the model information of the terminal device is obtained, where the second target query table includes power loss thresholds corresponding to a plurality of sample models; and
a power loss thresholds corresponding to the model information of the current terminal device is obtained from the second target query table.

In this step, the power loss thresholds corresponding to the sample models of a plurality of terminal devices are pre-stored in the second target query table. According to the model of the current terminal device connected to the wireless charging apparatus, the corresponding power loss threshold is called from the second target query table.

**In** step S208: the working condition information of the wireless charging apparatus is obtained;
The working condition information of the wireless charging apparatus includes the current transmitting power of the wireless charging apparatus and the receiving power of the terminal device, where the wireless charging apparatus may receive the receiving power fed back by the terminal device.

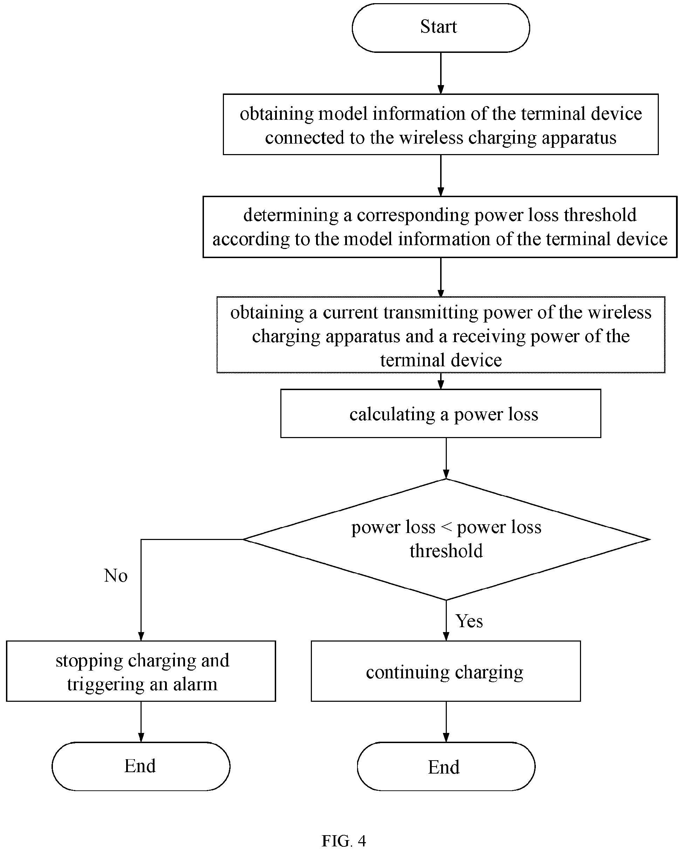

**In** step S209: a charging state of the wireless charging apparatus for the terminal device is controlled based on a magnitude relationship between the working condition information of the wireless charging apparatus and the power loss threshold, the step specifically includes:
referring to the specific determination process FIG. 4, calculating a power loss between the current transmitting power of the wireless charging apparatus and the receiving power of the terminal device; specifically, the power loss = transmitting power - receiving power;
controlling, if the power loss is less than the power loss threshold, the wireless charging apparatus to continue charging the terminal device; when the power of the terminal device reaches a certain level, for example, when the power of a mobile phone is more than 90%, the wireless charging apparatus being able to reduce the charging power;
controlling, if the power loss is greater than or equal to the power loss threshold, the wireless charging apparatus to stop charging the terminal device and triggering an alarm; the alarm which may be in the form of text, sound or light notifying the user that there is a foreign object between the wireless charging apparatus and the terminal device.

Therefore, during the charging process, in addition to determining a foreign object using the Q factor, the foreign object during the charging process may also be detected through the power loss and power loss threshold, and an alarm will be issued to the user, which to a certain extent reduces the impact of foreign objects on the charging process.

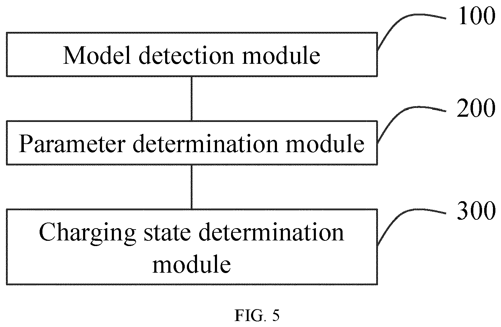

Based on the same inventive concept, with reference to FIG. 5, a schematic diagram of a wireless charging control device is shown. As shown in FIG. 5, the control device may specifically include the following modules:
a model detection module 100, configured to obtain model information of a terminal device connected to a wireless charging apparatus, where the wireless charging apparatus is used to wirelessly charge the terminal device;
a parameter determination module 200, configured to determine a corresponding foreign-object alarm threshold according to the model information of the terminal device; and
a charging state determination module 300, configured to control a charging state of the wireless charging apparatus for the terminal device based on a magnitude relationship between a current Q factor of the wireless charging apparatus and the foreign-object alarm threshold.

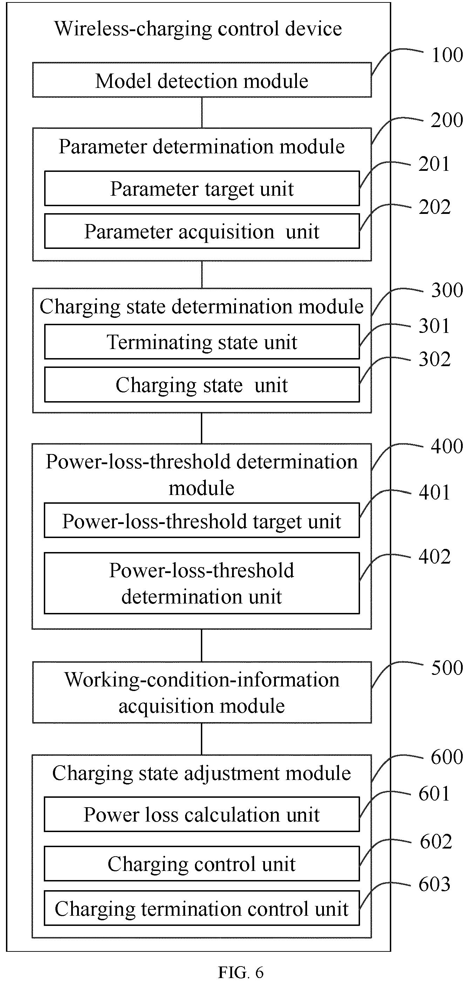

Referring to FIG. 6, a schematic diagram of a wireless charging control device is disclosed. As shown in FIG. 6, the control device may specifically include:
specifically, the parameter determination module 200 including a parameter target unit 201 and a parameter acquisition unit 202, where,
the parameter target unit 201 is configured to obtain a first target query table corresponding to the model information of the terminal device, and the first target query table includes foreign-object alarm thresholds corresponding to respective sample models of a plurality of terminal devices;
the parameter acquisition unit 202 is configured to acquire the foreign-object alarm threshold corresponding to the model information of a current terminal device from the first target query table.

Specifically, the charging state determination module 300 includes:
a terminating state unit 301, configured to control the wireless charging apparatus to stop matching the terminal device, and trigger an alarm when the current Q factor is less than the foreign-object alarm threshold; and
a charging state unit 302, configured to control the wireless charging apparatus to match and charge the terminal device when the current Q factor is greater than or equal to the foreign-object alarm threshold.

Specifically, the control device also includes:
a power-loss-threshold determination module 400, configured to determine a corresponding power loss threshold according to the model information of the terminal device;
a working-condition-information acquisition module 500, configured to obtain working condition information of the wireless charging apparatus;
a charging state adjustment module 600 for controlling, during the process of charging the terminal device, the charging state of the wireless charging apparatus for the terminal device based on a magnitude relationship between the working condition information of the wireless charging apparatus and the power loss threshold.

Specifically, the power-loss-threshold determination module 400 includes:
a power-loss-threshold target unit 401, configured to obtain a second target query table corresponding to the model information of the terminal device, where the second target query table includes power loss thresholds corresponding to a plurality of sample models;
a power-loss-threshold determination unit 402, configured to obtain the power loss threshold corresponding to the model information of a current terminal device from the second target query table.

The working condition information of the wireless charging apparatus includes the current transmitting power of the wireless charging apparatus and the receiving power of the terminal device.

Specifically, the charging state adjustment module 600 includes:
a power loss calculation unit 601, configured to calculate a power loss between the current transmission power of the wireless charging apparatus and the reception power of the terminal device;
a charging control unit 602 for controlling, if the power loss is less than the power loss threshold, the wireless charging apparatus to continue charging the terminal device; and
a charging termination control unit 603 for controlling, if the power loss is greater than or equal to the power loss threshold, the wireless charging apparatus to stop charging the terminal device and triggering an alarm.

The examples of the device are basically similar to the examples of the method and thus briefly described. The relevant details can be referred to the description of the examples of the method.

Based on the same concept, the present invention provides a vehicle. The vehicle is equipped with a wireless charging control device as provided herein above. The wireless charging control device executes the control method provided hereinabove.

Specifically, the wireless charging control device is integrated with the wireless charging apparatus on the vehicle, and is configured to determine the model of the mobile phone during the user's charging process and conduct more accurate foreign object detection for mobile phones of different models.

Various components of the present invention as defined in the claims may be implemented in hardware, or in software modules running on one or more processors, or in a combination thereof. Those skilled in the art will understand that a microprocessor or a digital signal processor (DSP) may be used in practice to implement some or all functions of some or all components in a computing processing equipment. The present invention as defined in the claims may also be implemented as an apparatus or apparatus program (e.g., computer program and computer program product) for performing part or all of the methods described herein. Such a program implementing the present disclosure may be stored on a computer-readable medium, or may be in the form of one or more signals. Such signals may be downloaded from an Internet website, or provided on a carrier signal, or in any other form.

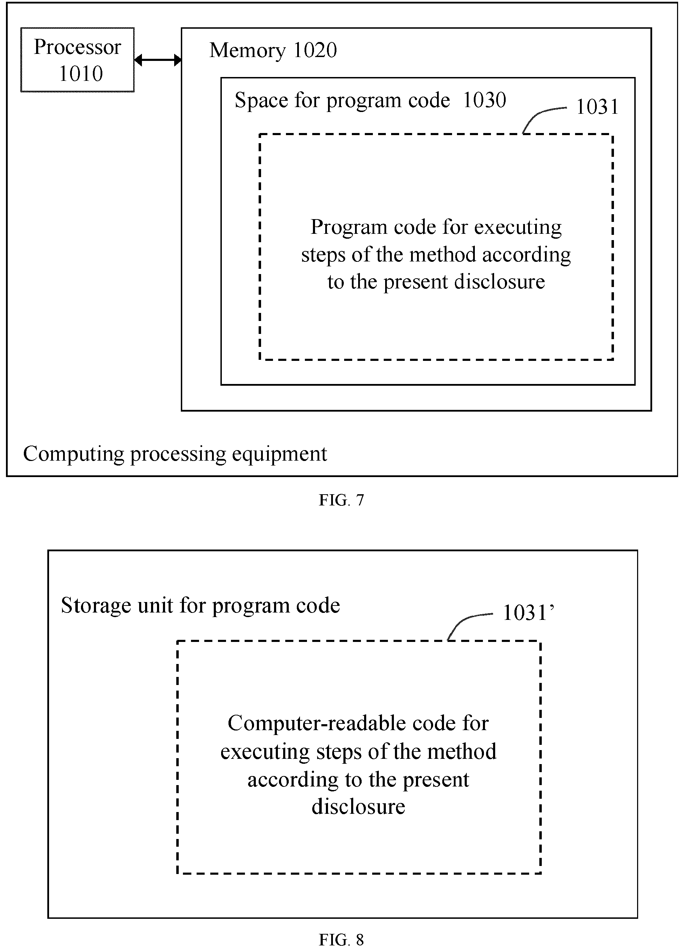

For example, FIG. 7 illustrates a computing processing equipment that may implement the method of the present invention. The computing processing equipment conventionally includes a processor 1010 and a computer program product or computer-readable medium in the form of a memory 1020. The memory 1020 may be electronic memory such as flash memory, EEPROM (electrically erasable programmable read only memory), EPROM, hard disk, or ROM. The memory 1020 has a storage space 1030 for program code 1031 for executing any steps in the above methods. For example, the storage space 1030 for program code may include individual program code 1031 respectively used to implement various steps in the above method. These program code may be read from or written into one or more computer program products. These computer program products include program code carriers such as hard disks, compact disks (CDs), memory cards, or floppy disks. Such computer program products are typically portable or fixed storage units as described with reference to FIG. 8. The storage unit may have storage segments, storage spaces, etc. arranged similarly to the memory 1020 in the computing processing equipment of FIG. 7. The program code may, for example, be compressed in a suitable form. Typically, the storage unit includes computer-readable code 1031', namely, code that can be read by, for example, a processor such as 1010, which code, when executed by a computing processing equipment, causes the computing processing equipment to perform the various steps in the method described above.

Those skilled in the art should understand that the present invention defined in the claims may be implemented as method, device, or computer program product. Therefore, the present invention may take the form of an entirely hardware, an entirely software, or combine software and hardware aspects. Furthermore, the present invention may take the form of a computer program product implemented on one or more computer-usable storage media (including but not limited to disk storage, CD-ROM, optical storage, etc.) having computer-usable program code embodied therein.

The present invention is described with reference to flowcharts and/or block diagrams of methods, terminal devices (systems), and computer program products. It will be understood that each process and/or block in the flowchart illustrations and/or block diagrams, and combinations of processes and/or blocks in the flowchart illustrations and/or block diagrams, may be implemented by computer program instructions. These computer program instructions may be provided to a processor of a general-purpose computer, a special-purpose computer, an embedded processor, or other programmable data-processing terminal device to produce a machine such that the instructions executed by the processor of the computer or other programmable data-processing terminal device produce a device for carrying out the functions specified in the flowchart one process or more processes and/or the block diagram one box or more boxes.

These computer program instructions may also be stored in a computer-readable memory capable of directing a computer or other programmable data processing terminal device to operate in a particular manner, such that the instructions stored in that computer-readable memory produce an article of manufacture comprising an instruction device that implements a function specified in one or more processes of a flowchart and/or one or more boxes of a block diagram.

These computer program instructions may also be loaded onto a computer or other programmable data processing terminal device such that a series of operational steps are executed on the computer or other programmable terminal device to produce computer-implemented processing, such that the instructions executed on the computer or other programmable terminal device provide steps for implementing the functions specified in the one process or multiple processes of the flowchart and/or the one or more boxes of the block diagram.

Finally, it should be noted that herein, relational terms such as first and second are only used to distinguish one entity or operation from another entity or operation, and do not necessarily require or imply existence of any such actual relationship or order between those entities or operations. Furthermore, the terms "comprising", "including", or any other variation thereof are intended to cover a non-exclusive inclusion such that a process, method, article, or terminal device that includes a list of elements includes not only those elements, but also elements not expressly listed or other elements inherent to such process, method, article or terminal device. Without further limitation, an element defined by the statement "comprises a..." does not exclude the presence of additional identical elements in a process, method, article or terminal device including the stated element.

## Claims

1. A wireless charging control method, comprising:
(S101) obtaining model information of a terminal device connected to a wireless charging apparatus, wherein the wireless charging apparatus is configured to wirelessly charge the terminal device;
(S102) determining a corresponding foreign-object alarm threshold according to the model information, comprising:
- obtaining a first target query table corresponding to the model information, wherein the first target query table comprises pre-stored foreign-object alarm thresholds corresponding to respective sample models of a plurality of terminal devices; and
- obtaining, from the first target query table, the foreign-object alarm threshold corresponding to the model information;
(S103) controlling a charging state of the wireless charging apparatus for the terminal device according to the magnitude relationship between a current Q factor of the wireless charging apparatus and the foreign-object alarm threshold, comprising:
- controlling, if the current Q factor is less than the foreign-object alarm threshold, the wireless charging apparatus to stop matching the terminal device and triggering an alarm; and
- controlling, if the current Q factor is greater than or equal to the foreign-object alarm threshold, the wireless charging apparatus to match and charge the terminal device;
wherein, during a charging process of the terminal device, the method further comprises:
(S201) determining a corresponding power loss threshold according to the model information comprising:
- obtaining a second target query table corresponding to the model information, wherein the second target query table comprises pre-stored power loss thresholds corresponding to a plurality of sample models; and
- obtaining, from the second target query table, the power loss threshold corresponding to the model information;
(S202) obtaining working-condition information of the wireless charging apparatus, wherein the working-condition information comprises
- a current transmitting power of the wireless charging apparatus and
- a receiving power of the terminal device; the method **characterized by**
(S203) controlling the charging state of the wireless charging apparatus for the terminal device according to the magnitude relationship between the working-condition information and the power loss threshold, comprising:
- calculating a power loss between the current transmitting power and the receiving power;
- controlling, if the power loss is less than the power loss threshold, the wireless charging apparatus to continue charging the terminal device; and
- controlling, if the power loss is greater than or equal to the power loss threshold, the wireless charging apparatus to stop charging the terminal device and triggering an alarm.

2. The control method according to claim 1, wherein the first target query table is stored in a local storage or is obtained through the internet.

3. The control method according to claim 1 or 2, wherein obtaining the model information of the terminal device comprises identifying the model of the terminal device by obtaining an image of the terminal device.

4. The control method according to claim 3, wherein the terminal device is a mobile phone, and the method comprises:
- obtaining the image information of the mobile phone,
- processing the image of the mobile phone,
- extracting the shape, trademark and camera shape characteristics of the mobile phone from the image and matching the characteristics with samples from a pre-established database to determine the model number of the most similar sample being the model information of the terminal device.

5. The control method according to any one of claims 1 to 4, wherein the alarm comprises one or more of a sound, a light, or a text.

6. A wireless charging control device, comprising:
a model detection module (100), configured to obtain model information of a terminal device connected to a wireless charging apparatus, wherein the wireless charging apparatus is configured to wirelessly charge the terminal device;
a parameter determination module (200), configured to determine a corresponding foreign-object alarm threshold according to the model information of the terminal device, the parameter determination module comprises a parameter target unit and a parameter acquisition unit, wherein: the parameter target unit (201) is configured to obtain a first target query table corresponding to the model information, wherein the first target query table comprises pre-stored foreign-object alarm thresholds corresponding to respective sample models of a plurality of terminal devices; and the parameter acquisition unit (202) is configured to, from the first target query table, acquire a foreign-object alarm threshold corresponding to the model information; and
a charging state determination module (300), configured to control a charging state of the wireless charging apparatus for the terminal device according to a magnitude relationship between a current Q factor of the wireless charging apparatus and the foreign-object alarm threshold, wherein the charging state determination module (300) comprises: a terminating state unit (301), configured to control the wireless charging apparatus to stop matching the terminal device and trigger an alarm when the current Q factor is less than the foreign-object alarm threshold; and a charging state unit (302), configured to control the wireless charging apparatus to match and charge the terminal device when the current Q factor is greater than or equal to the foreign-object alarm threshold;
a power-loss-threshold determination module (400), configured to determine a corresponding power loss threshold according to the model information, wherein the power-loss-threshold determination module (400) comprises: a power-loss-threshold target unit (401), configured to obtain a second target query table corresponding to the model information of the terminal device, wherein the second target query table comprises pre-stored power loss thresholds corresponding to a plurality of sample models; and a power-loss-threshold determination unit (402), configured to, from the second target query table, obtain the power loss threshold corresponding to the model information;
a working-condition-information acquisition module (500), configured to obtain working-condition information of the wireless charging apparatus, wherein the working-condition information of the wireless charging apparatus comprises a current transmitting power of the wireless charging apparatus and a receiving power of the terminal device;
a charging state adjustment module (600), configured to control, during the process of charging the terminal device, the charging state of the wireless charging apparatus for the terminal device according to a magnitude relationship between the working-condition information and the power loss threshold, wherein the charging state adjustment module (600) comprises: a power loss calculation unit (601), configured to calculate a power loss between the current transmitting power and the receiving power; a charging control unit (602), configured to control, if the power loss is less than the power loss threshold, the wireless charging apparatus to continue charging the terminal device; and a charging termination control unit (603), configured to control, if the power loss is greater than or equal to the power loss threshold, the wireless charging apparatus to stop charging the terminal device and trigger an alarm.

7. The control device according to claim 6, wherein the first target query table is stored in a memory or is obtained through the internet.

8. The control device according to any one of claims 6 to 7, wherein the alarm comprises one or more of a sound, a light, or a text.

9. A vehicle, wherein the vehicle is equipped with the wireless charging control device according to any of the claims 6-8.

10. A computer program, comprising computer-readable code, and when the computer-readable code is run on a computing processing equipment, the computer-readable code causing the computing processing equipment to execute the wireless charging control method according to any of claims 1 to 5.

11. A computer-readable medium in which the computer program according to claim 10 is stored.

## Patentansprüche

1. Verfahren zur Steuerung drahtlosen Ladens, mit:
(S101) Erhalten von Modellinformation eines mit einer drahtlosen Ladeeinrichtung verbundenen Endgeräts, wobei die drahtlose Ladeeinrichtung dazu ausgebildet ist, das Endgerät drahtlos zu laden;
(S102) Bestimmen einer entsprechenden Fremdobjekt-Alarmschwelle anhand der Modellinformation, mit:
- Erhalten einer ersten Ziel-Abfragetabelle, die der Modellinformation entspricht, wobei die erste Ziel-Abfragetabelle vorgespeicherte Fremdobjekt-Alarmschwellen aufweist, die jeweiligen Mustermodellen einer Mehrzahl von Endgeräten entsprechen; und
- Erhalten, aus der ersten Ziel-Abfragetabelle, der Fremdobjekt-Alarmschwelle, die der Modellinformation entspricht;
(S103) Steuern eines Ladezustands der drahtlosen Ladeeinrichtung für das Endgerät anhand der Größenbeziehung zwischen einem aktuellen Q-Faktor der drahtlosen Ladeeinrichtung und der Fremdobjekt-Alarmschwelle, mit:
- Steuern, wenn der aktuelle Q-Faktor kleiner als die Fremdobjekt-Alarmschwelle ist, der drahtlosen Ladeeinrichtung derart, dass sie das Abstimmen auf das Endgerät beendet und einen Alarm auslöst; und
- Steuern, wenn der aktuelle Q-Faktor größer als oder gleich der Fremdobjekt-Alarmschwelle ist, der drahtlosen Ladeeinrichtung derart, dass sie sich auf das Endgerät abstimmt und dieses lädt;
wobei das Verfahren während eines Ladevorgangs des Endgeräts ferner aufweist:
(S201) Bestimmen einer entsprechenden Leistungsverlustschwelle anhand der Modellinformation aufweisend:
- Erhalten einer zweiten Ziel-Abfragetabelle, die der Modellinformation entspricht, wobei die zweite Ziel-Abfragetabelle vorgespeicherte Leistungsverlustschwellen aufweist, die einer Mehrzahl von Mustermodellen entsprechen; und
- Erhalten, aus der zweiten Ziel-Abfragetabelle, der Leistungsverlustschwelle, die der Modellinformation entspricht;
(S202) Erhalten von Betriebszustandsinformation der drahtlosen Ladeeinrichtung, wobei die Betriebszustandsinformation aufweist
- eine aktuelle Sendeleistung der drahtlosen Ladeeinrichtung und
- eine Empfangsleistung des Endgeräts;
wobei das Verfahren **gekennzeichnet ist durch**
(S203) Steuern des Ladezustands der drahtlosen Ladeeinrichtung für das Endgerät anhand der Größenbeziehung zwischen der Betriebszustandsinformation und der Leistungsverlustschwelle, mit:
- Berechnen eines Leistungsverlusts zwischen der aktuellen Sendeleistung und der Empfangsleistung;
- Steuern, wenn der Leistungsverlust kleiner als die Leistungsverlustschwelle ist, der drahtlosen Ladeeinrichtung derart, dass sie das Endgerät weiter lädt; und
- Steuern, wenn der Leistungsverlust größer als oder gleich der Leistungsverlustschwelle ist, der drahtlosen Ladeeinrichtung derart, dass sie das Laden des Endgeräts beendet und einen Alarm auslöst.

2. Steuerverfahren nach Anspruch 1, wobei die erste Ziel-Abfragetabelle in einem lokalen Speicher gespeichert ist oder über das Internet erhalten wird.

3. Steuerverfahren nach Anspruch 1 oder 2, wobei das Erhalten der Modellinformation des Endgeräts ein Identifizieren des Modells des Endgeräts durch Erhalten eines Bildes des Endgeräts aufweist.

4. Steuerverfahren nach Anspruch 3, wobei das Endgerät ein Mobiltelefon ist und das Verfahren aufweist:
- Erhalten der Bildinformation des Mobiltelefons,
- Verarbeiten des Bildes des Mobiltelefons,
- Extrahieren der Form-, Markenzeichen- und Kameraformmerkmale des Mobiltelefons aus dem Bild und Abgleichen der Merkmale mit Mustern aus einer vorab eingerichteten Datenbank, um die Modellnummer des ähnlichsten Musters zu bestimmen, die die Modellinformation des Endgeräts ist.

5. Steuerverfahren nach einem der Ansprüche 1 bis 4, wobei der Alarm eines oder mehrere von einem Ton, einem Licht oder einem Text aufweist.

6. Vorrichtung zur Steuerung des drahtlosen Ladens, mit:
einem Modellerkennungsmodul (100), das dazu ausgebildet ist, Modellinformation eines mit einer drahtlosen Ladeeinrichtung verbundenen Endgeräts zu erhalten, wobei die drahtlose Ladeeinrichtung dazu ausgebildet ist, das Endgerät drahtlos zu laden;
einem Parameterbestimmungsmodul (200), das dazu ausgebildet ist, eine entsprechende Fremdobjekt-Alarmschwelle anhand der Modellinformation des Endgeräts zu bestimmen, wobei das Parameterbestimmungsmodul eine Parameter-Zieleinheit und eine Parametererfassungseinheit aufweist, wobei:
die Parameter-Zieleinheit (201) dazu ausgebildet ist, eine erste Ziel-Abfragetabelle zu erhalten, die der Modellinformation entspricht, wobei die erste Ziel-Abfragetabelle vorgespeicherte Fremdobjekt-Alarmschwellen aufweist, die jeweiligen Mustermodellen einer Mehrzahl von Endgeräten entsprechen; und
die Parametererfassungseinheit (202) dazu ausgebildet ist, aus der ersten Ziel-Abfragetabelle eine Fremdobjekt-Alarmschwelle zu erfassen, die der Modellinformation entspricht; und
ein Ladezustandsbestimmungsmodul (300), das dazu ausgebildet ist, einen Ladezustand der drahtlosen Ladeeinrichtung für das Endgerät anhand einer Größenbeziehung zwischen einem aktuellen Q-Faktor der drahtlosen Ladeeinrichtung und der Fremdobjekt-Alarmschwelle zu steuern, wobei das Ladezustandsbestimmungsmodul (300) aufweist: eine Beendigungszustandseinheit (301), die dazu ausgebildet ist, die drahtlose Ladeeinrichtung derart zu steuern, dass sie das Abstimmen auf das Endgerät beendet und einen Alarm auslöst, wenn der aktuelle Q-Faktor kleiner als die Fremdobjekt-Alarmschwelle ist; und eine Ladezustandseinheit (302), die dazu ausgebildet ist, die drahtlose Ladeeinrichtung derart zu steuern, dass sie sich auf das Endgerät abstimmt und dieses lädt, wenn der aktuelle Q-Faktor größer als oder gleich der Fremdobjekt-Alarmschwelle ist;
ein Leistungsverlustschwellen-Bestimmungsmodul (400), das dazu ausgebildet ist, eine entsprechende Leistungsverlustschwelle anhand der Modellinformation zu bestimmen, wobei das Leistungsverlustschwellen-Bestimmungsmodul (400) aufweist: eine Leistungsverlustschwellen-Zieleinheit (401), die dazu ausgebildet ist, eine zweite Ziel-Abfragetabelle zu erhalten, die der Modellinformation des Endgeräts entspricht, wobei die zweite Ziel-Abfragetabelle vorgespeicherte Leistungsverlustschwellen aufweist, die einer Mehrzahl von Mustermodellen entsprechen; und eine Leistungsverlustschwellen-Bestimmungseinheit (402), die dazu ausgebildet ist, aus der zweiten Ziel-Abfragetabelle die Leistungsverlustschwelle zu erhalten, die der Modellinformation entspricht;
ein Betriebszustandsinformations-Erfassungsmodul (500), das dazu ausgebildet ist, Betriebszustandsinformation der drahtlosen Ladeeinrichtung zu erhalten, wobei die Betriebszustandsinformation der drahtlosen Ladeeinrichtung eine aktuelle Sendeleistung der drahtlosen Ladeeinrichtung und eine Empfangsleistung des Endgeräts aufweist;
ein Ladezustands-Anpassungsmodul (600), das dazu ausgebildet ist, während des Ladens des Endgeräts den Ladezustand der drahtlosen Ladeeinrichtung für das Endgerät anhand einer Größenbeziehung zwischen der Betriebszustandsinformation und der Leistungsverlustschwelle zu steuern, wobei das Ladezustands-Anpassungsmodul (600) aufweist: eine Leistungsverlust-Berechnungseinheit (601), die dazu ausgebildet ist, einen Leistungsverlust zwischen der aktuellen Sendeleistung und der Empfangsleistung zu berechnen; eine Ladesteuereinheit (602), die dazu ausgebildet ist, wenn der Leistungsverlust kleiner als die Leistungsverlustschwelle ist, die drahtlose Ladeeinrichtung derart zu steuern, dass sie das Endgerät weiter lädt; und eine Ladebeendigungs-Steuereinheit (603), die dazu ausgebildet ist, wenn der Leistungsverlust größer als oder gleich der Leistungsverlustschwelle ist, die drahtlose Ladeeinrichtung derart zu steuern, dass sie das Laden des Endgeräts beendet und einen Alarm auslöst.

7. Steuervorrichtung nach Anspruch 6, wobei die erste Ziel-Abfragetabelle in einem Speicher gespeichert ist oder über das Internet erhalten wird.

8. Steuervorrichtung nach einem der Ansprüche 6 bis 7, wobei der Alarm eines oder mehrere von einem Ton, einem Licht oder einem Text aufweist.

9. Fahrzeug, wobei das Fahrzeug mit der Vorrichtung zur Steuerung des drahtlosen Ladens nach einem der Ansprüche 6 bis 8 ausgestattet ist.

10. Computerprogramm, aufweisend computerlesbaren Code, wobei der computerlesbare Code, wenn er auf einem Rechenverarbeitungsgerät ausgeführt wird, das Rechenverarbeitungsgerät veranlasst, das Verfahren zur Steuerung des drahtlosen Ladens nach einem der Ansprüche 1 bis 5 auszuführen.

11. Computerlesbares Medium, in dem das Computerprogramm nach Anspruch 10 gespeichert ist.

## Revendications

1. Procédé de commande de charge sans fil, comprenant :
(S101) l'obtention d'une information de modèle d'un dispositif terminal qui est connecté à un appareil de charge sans fil, dans lequel l'appareil de charge sans fil est configuré pour charger sans fil le dispositif terminal ;
(S102) la détermination d'un seuil d'alarme de détection de corps étranger correspondant en fonction de l'information de modèle, comprenant :
- l'obtention d'une première table de consultation de cible qui correspond à l'information de modèle, dans lequel la première table de consultation de cible comprend des seuils d'alarme de détection de corps étranger pré-stockés qui correspondent à des modèles de référence respectifs d'une pluralité de dispositifs terminaux ; et
- l'obtention, à partir de la première table de consultation de cible, du seuil d'alarme de détection de corps étranger qui correspond à l'information de modèle ; et
(S103) la commande d'un état de charge de l'appareil de charge sans fil pour le dispositif terminal en fonction de la relation d'amplitudes entre un facteur Q courant de l'appareil de charge sans fil et le seuil d'alarme de détection de corps étranger, comprenant :
- la commande, si le facteur Q courant est inférieur au seuil d'alarme de détection de corps étranger, de l'appareil de charge sans fil de telle sorte qu'il arrête la mise en correspondance avec le dispositif terminal et qu'il déclenche une alarme ; et
- la commande, si le facteur Q courant est supérieur ou égal au seuil d'alarme de détection de corps étranger, de l'appareil de charge sans fil de telle sorte qu'il soit mis en correspondance avec le dispositif terminal et qu'il procède à sa charge ;
dans lequel, pendant un processus de charge du dispositif terminal, le procédé comprend en outre :
(S201) la détermination d'un seuil de perte de puissance correspondant en fonction de l'information de modèle comprenant :
- l'obtention d'une seconde table de consultation de cible qui correspond à l'information de modèle, dans lequel la seconde table de consultation de cible comprend des seuils de perte de puissance pré-stockés qui correspondent à une pluralité de modèles de référence ; et
- l'obtention, à partir de la seconde table de consultation de cible, du seuil de perte de puissance qui correspond à l'information de modèle ; et
(S202) l'obtention d'une information de condition de fonctionnement de l'appareil de charge sans fil, dans lequel l'information de condition de fonctionnement comprend :
- une puissance d'émission courante de l'appareil de charge sans fil ; et
- une puissance de réception du dispositif terminal ;
le procédé étant **caractérisé par** :
(S203) la commande de l'état de charge de l'appareil de charge sans fil pour le dispositif terminal en fonction de la relation d'amplitudes entre l'information de condition de fonctionnement et le seuil de perte de puissance, comprenant :
- le calcul d'une perte de puissance entre la puissance d'émission courante et la puissance de réception ;
- la commande, si la perte de puissance est inférieure au seuil de perte de puissance, de l'appareil de charge sans fil de telle sorte qu'il continue à charger le dispositif terminal ; et
- la commande, si la perte de puissance est supérieure ou égale au seuil de perte de puissance, de l'appareil de charge sans fil de telle sorte qu'il arrête la charge du dispositif terminal et qu'il déclenche une alarme.

2. Procédé de commande selon la revendication 1, dans lequel la première table de consultation de cible est stockée dans un dispositif de stockage local ou est obtenue par l'intermédiaire de l'Internet.

3. Procédé de commande selon la revendication 1 ou 2, dans lequel l'obtention de l'information de modèle du dispositif terminal comprend l'identification du modèle du dispositif terminal en obtenant une image du dispositif terminal.

4. Procédé de commande selon la revendication 3, dans lequel le dispositif terminal est un téléphone mobile, et le procédé comprend :
- l'obtention de l'information d'image du téléphone mobile ;
- le traitement de l'image du téléphone mobile ; et
- l'extraction des caractéristiques de forme, de marque commerciale et de forme de caméra du téléphone mobile à partir de l'image et la mise en correspondance des caractéristiques avec des modèles de référence en provenance d'une base de données préétablie afin de déterminer le numéro de modèle du modèle de référence le plus similaire qui est l'information de modèle du dispositif terminal.

5. Procédé de commande selon l'une quelconque des revendications 1 à 4, dans lequel l'alarme comprend un ou plusieurs moyens d'alarme parmi un son, une lumière et un texte.

6. Dispositif de commande de charge sans fil, comprenant :
un module de détection de modèle (100), configuré pour obtenir une information de modèle d'un dispositif terminal qui est connecté à un appareil de charge sans fil, dans lequel l'appareil de charge sans fil est configuré pour charger sans fil le dispositif terminal ;
un module de détermination de paramètre (200), configuré pour déterminer un seuil d'alarme de détection de corps étranger correspondant en fonction de l'information de modèle du dispositif terminal, dans lequel le module de détermination de paramètre comprend une unité de cible de paramètre et une unité d'acquisition de paramètre, et dans lequel :
l'unité de cible de paramètre (201) est configurée pour obtenir une première table de consultation de cible qui correspond à l'information de modèle, dans lequel la première table de consultation de cible comprend des seuils d'alarme de détection de corps étranger pré-stockés qui correspondent à des modèles de référence respectifs d'une pluralité de dispositifs terminaux ; et
l'unité d'acquisition de paramètre (202) est configurée pour acquérir, à partir de la première table de consultation de cible, un seuil d'alarme de détection de corps étranger qui correspond à l'information de modèle ; et
un module de détermination d'état de charge (300), configuré pour commander un état de charge de l'appareil de charge sans fil pour le dispositif terminal en fonction d'une relation d'amplitudes entre un facteur Q courant de l'appareil de charge sans fil et le seuil d'alarme de détection de corps étranger, dans lequel le module de détermination d'état de charge (300) comprend : une unité d'état de fin (301), configurée pour commander l'appareil de charge sans fil de telle sorte qu'il arrête la mise en correspondance avec le dispositif terminal et qu'il déclenche une alarme lorsque le facteur Q courant est inférieur au seuil d'alarme de détection de corps étranger ; et une unité d'état de charge (302), configurée pour commander l'appareil de charge sans fil de telle sorte qu'il soit mis en correspondance avec le dispositif terminal et qu'il procède à sa charge lorsque le facteur Q courant est supérieur ou égal au seuil d'alarme de détection de corps étranger ;
un module de détermination de seuil de perte de puissance (400), configuré pour déterminer un seuil de perte de puissance correspondant en fonction de l'information de modèle, dans lequel le module de détermination de seuil de perte de puissance (400) comprend : une unité de cible de seuil de perte de puissance (401), configurée pour obtenir une seconde table de consultation de cible qui correspond à l'information de modèle du dispositif terminal, dans lequel la seconde table de consultation de cible comprend des seuils de perte de puissance pré-stockés qui correspondent à une pluralité de modèles de référence ; et une unité de détermination de seuil de perte de puissance (402), configurée pour, à partir de la seconde table de consultation de cible, obtenir le seuil de perte de puissance qui correspond à l'information de modèle ;
un module d'acquisition d'information de condition de fonctionnement (500), configuré pour obtenir une information de condition de fonctionnement de l'appareil de charge sans fil, dans lequel l'information de condition de fonctionnement de l'appareil de charge sans fil comprend une puissance d'émission courante de l'appareil de charge sans fil et une puissance de réception du dispositif terminal ; et
un module de réglage d'état de charge (600), configuré pour commander, pendant le processus de charge du dispositif terminal, l'état de charge de l'appareil de charge sans fil pour le dispositif terminal en fonction d'une relation d'amplitudes entre l'information de condition de fonctionnement et le seuil de perte de puissance, dans lequel le module de réglage d'état de charge (600) comprend : une unité de calcul de perte de puissance (601), configurée pour calculer une perte de puissance entre la puissance d'émission courante et la puissance de réception ; une unité de commande de charge (602), configurée pour commander, si la perte de puissance est inférieure au seuil de perte de puissance, l'appareil de charge sans fil de telle sorte qu'il continue à charger le dispositif terminal ; et une unité de commande de fin de charge (603), configurée pour commander, si la perte de puissance est supérieure ou égale au seuil de perte de puissance, l'appareil de charge sans fil de telle sorte qu'il arrête la charge du dispositif terminal et qu'il déclenche une alarme.

7. Dispositif de commande selon la revendication 6, dans lequel la première table de consultation de cible est stockée dans un dispositif de stockage local ou est obtenue par l'intermédiaire de l'Internet.

8. Dispositif de commande selon l'une quelconque des revendications 6 et 7, dans lequel l'alarme comprend un ou plusieurs moyens d'alarme parmi un son, une lumière et un texte

9. Véhicule, dans lequel le véhicule est équipé du dispositif de commande de charge sans fil selon l'une quelconque des revendications 6 à 8.

10. Programme informatique, comprenant un code lisible par ordinateur, et lorsque le code lisible par ordinateur est exécuté sur un équipement de traitement informatique, le code lisible par ordinateur a pour effet que l'équipement de traitement informatique met en œuvre le procédé de commande de charge sans fil selon l'une quelconque des revendications 1 à 5.

11. Support lisible par ordinateur dans lequel le programme informatique selon la revendication 10 est stocké.
